# EUROPÄISCHE PATENTANMELDUNG

(11) **EP 2 957 789 A2**
(43) Veröffentlichungstag der Anmeldung: **23.12.2015**
(21) Anmeldenummer: 15169815.6
(22) Anmeldetag: 29.05.2015
(51) Int. Cl.: F16D 13/75

(54) **STÜTZFEDER FÜR EIN BETÄTIGUNGSSYSTEM EINER REIBKUPPLUNG**

(30) Priorität: 16.06.2014 DE 102014211437
(71) Anmelder: Schaeffler Technologies AG & Co. KG, 91074 Herzogenaurach (DE)
(72) Erfinder: Voorspoels, Ludovic, 67410 Drusenheim (FR); Fohrer, Thierry, 67850 Offendorf (FR); Merckling, Tony, 67340 Schillersdorf (FR)

(57) **Zusammenfassung**

Die Erfindung betrifft eine Stützfeder für ein Betätigungssystem einer Reibkupplung, welche zumindest die folgenden Komponenten aufweist:
- einen umlaufenden Federring;
- zumindest ein Verbindungselement zum Anbinden der Stützfeder mittels Befestigungsmittel, bevorzugt mittels Deckelniet, für eine Betätigungsfeder; und
- zumindest ein Stützelement zur Anlage an einer Betätigungsfeder eines Betätigungssystems und zur Übertragung einer Stützkraft auf diese Betätigungsfeder, wobei das Stützelement und das Verbindungselement unmittelbar mit dem Federring verbunden sind.

Mit der hier vorgeschlagenen Stützfeder ist eine bauraumsparende und materialsparende Konfiguration vorgeschlagen, die leicht in eine Reibkupplung mit geringer axialer Ausdehnung einbindbar ist.

## Beschreibung

Die Erfindung betrifft eine Stützfeder für ein Betätigungssystem einer Reibkupplung sowie ein Betätigungssystem für eine Reibkupplung, insbesondere für ein Kraftfahrzeug.

Aus dem Stand der Technik sind verschiedene Konfigurationen bekannt, eine Betätigungsfeder einer Reibkupplung zu lagern, die dazu eingerichtet ist, die Reibpartner der Reibkupplung miteinander zu verpressen oder voneinander zu trennen. Dabei ist eine besonders bevorzugte Ausführungsform, eine Stützfeder zu verwenden. Diese Stützfeder ist bevorzugt zum Sensieren eines Nachstellbedarfs eingerichtet. Nachteilig ist bei den vorbekannten Stützfedern, dass diese über eine zusätzliche Anbindung in die Reibkupplung montiert werden müssen.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft eine Stützfeder für ein Betätigungssystem einer Reibkupplung, welche zumindest die folgenden Komponenten aufweist:
- einen umlaufenden Federring;
- zumindest ein Verbindungselement zum Anbinden der Stützfeder mittels Befestigungsmittel, bevorzugt mittels Deckelniet, für eine Betätigungsfeder; und
- zumindest ein Stützelement zur Anlage an einer Betätigungsfeder eines Betätigungssystems und zur Übertragung einer Stützkraft auf diese Betätigungsfeder, wobei das Stützelement und das Verbindungselement unmittelbar mit dem Federring verbunden sind.

Die hier vorgeschlagene Stützfeder ist dazu vorgesehen, eine Betätigungsfeder abzustützen, sodass diese durch die Stützfeder gelagert ist. Die Betätigungsfeder betätigt ein Reibpaket einer Reibkupplung, indem es die Partner miteinander verpresst beziehungsweise voneinander trennt. Die Stützfeder umfasst einen umlaufenden Federring, welcher geschlossen ist und nach Art einer Tellerfeder einen äußeren Rand und einen inneren Rand aufweist und so einen Innenraum umschließt. Bevorzugt ist die gesamte Stützfeder aus einem Federstahl gebildet, sodass eine hohe Spannung beziehungsweise eine hohe Elastizität erreichbar ist. Zur Positionierung der Stützfeder ist zumindest ein Verbindungselement vorgesehen, bevorzugt eine Mehrzahl von Verbindungselementen, die über einen Umfang gleichmäßig verteilt sind. Das zumindest eine Verbindungselement ist beispielsweise als Lasche gebildet, die zumindest einen radialen Anschlag bildet, sodass die Stützfeder nicht verdrehbar ist. Die Lasche erstreckt sich bevorzugt nach innen. Weiterhin ist das Verbindungselement bevorzugt dazu eingerichtet, axial fixiert zu werden, sodass die Stützfeder eine Federkraft in Bezug auf die Lagerung mittels Verbindungselement ausübt.

Hier wird vorgeschlagen, das Verbindungselement mittels Befestigungsmitteln für eine Betätigungsfeder zu befestigen, sodass kein zusätzliches Betätigungsmittel für die Stützfeder vorgesehen werden muss. Damit wird Gewicht eingespart und zusätzlich der Einrichtungsaufwand zur Vermeidung von einer Unwucht deutlich reduziert. Das Befestigungsmittel ist zum Beispiel ein Deckelhaken, besonders bevorzugt ein Deckelniet, welcher einen Schaft zum Führen der Betätigungsfeder aufweist. Ein Deckelniet ist mit einem mitrotierenden Kupplungsdeckel der Reibkupplung vernietbar.

Weiterhin ist zumindest ein Stützelement vorgesehen, welches mit der Betätigungsfeder ein Auflager für die Betätigungsfeder der Reibkupplung bildet, um welches zum Beispiel eine Betätigungsfeder in Tellerfederkonfiguration verkippbar ist. Zu diesem Zweck leitet das Stützelement eine Stützkraft auf die Betätigungsfeder aus, die in der Regel der Betätigungskraft der Betätigungsfeder hin gerichtet ist. Besonders bevorzugt ist das Stützelement als Sensierfeder ausgeführt, mittels welcher eine Kraftüberschreitung der Betätigungsfeder und somit ein Nachstellen mit einer Nachstelleinrichtung der Reibkupplung auslösbar ist.

Hierbei ist nun das Stützelement unmittelbar an dem Federring verbunden. Das heißt, es sind keine weiteren Zwischenelemente zwischen dem Federring und dem Stützelement vorgesehen. Hierdurch wird der Aufbau der Stützfeder insgesamt besonders vereinfacht und bevorzugt wird gegenüber vorbekannten Stützfedern Material eingespart.

Gemäß einer weiteren vorteilhaften Ausführungsform der Stützfeder weist die Stützfeder weiterhin zumindest eine Minimumfederzunge auf, wobei die Minimumfederzunge im Einbau in einem Betätigungssystem in einem eingerückten Zustand der Betätigungsfeder von der Betätigungsfeder und einer Betätigungseinheit beabstandet ist oder kraftlos kontaktiert ist und in einem ausrückenden Zustand der Betätigungsfeder mit der Betätigungsfeder und/oder der Betätigungseinheit antagonistisch kraftschlüssig kontaktiert ist, wobei bevorzugt die zumindest eine Minimumfederzunge unmittelbar mit dem Federring verbunden ist.

Hier wird nun vorgeschlagen, eine Minimumfederzunge vorzusehen, welche dazu eingerichtet ist, ein auslenkungsbedingtes Nachlassen der Betätigungskraft von der Betätigungsfeder, insbesondere als Tellerfeder, von einem vorbestimmten Auslenkungsweg an zu unterstützen, sodass die resultierende Gesamtkraft zur Betätigung verändert wird, bevorzugt nicht weiter abfällt oder sogar erhöht wird. Die Minimumfederzunge ist hierzu bevorzugt in einer Grundstellung von der Betätigungsfeder beabstandet und kommt erst in einem Bereich des Nachlassens der Betätigungskraft der Betätigungsfeder mit der Betätigungsfeder in Kontakt. In dieser Konfiguration wird die Minimumfederzunge durch die Betätigungsfeder ausgelenkt. In einer anderen Konfiguration ist die Minimumfederzunge schon vorher kraftlos mit der Betätigungsfeder kontaktiert, sodass die Betätigungskraft in diesem Zustand nicht erhöht wird. In einer alternativen Konstruktion ist die Minimumfederzunge zusätzlich oder alternativ mit einer Betätigungseinheit kontaktierbar, welche zur Betätigung der Betätigungsfeder eingerichtet ist. In einer solchen Konfiguration wäre die Minimumfederzunge nicht (nur) mit der Betätigungsfeder in Reihe geschaltet, sondern (auch) zur Betätigungsfeder parallel geschaltet. Auch hier ist die Minimumfederzunge von der Betätigungseinheit beabstandet oder kraftlos mit ihr verbunden, und erst von einem vorbestimmten Ausrückweg an wird eine Kraft von der Minimumfederzunge auf die Betätigungseinheit übertragen. Auch so ergibt sich eine erhöhte Gesamtkraft, die ein erwünschtes Ausrückverhalten unterstützt. Hierdurch wird die Auslegung und Konfiguration der Betätigungsfeder erweitert, sodass eine günstige Geometrie oder Anfangskraftlinie erreicht werden kann und zugleich eine wünschenswerte Verringerung der Abnahme der Betätigungskraft erzielt wird.

Es ist besonders bevorzugt, die Minimumfederzunge unmittelbar mit dem Federring zu verbinden, das heißt, dass kein weiteres Element zwischen der Minimumfederzunge und dem Federring vorgesehen ist. Besonders bevorzugt ist die Minimumfederzunge aus demselben Material wie der Federring gefertigt, und besonders bevorzugt einstückig mit dem Federring ausgebildet.

Gemäß einer weiteren vorteilhaften Ausführungsform weist die Stützfeder weiterhin zumindest ein Verschleißkraftelement auf, wobei das Verschleißkraftelement im Einbau in einem Betätigungssystem eine der Einrückkraft der Betätigungsfeder entgegenwirkende Verschleißkraft auf das Betätigungssystem ausübt, wobei bevorzugt das zumindest eine Verschleißkraftelement mit der Betätigungsfeder antagonistisch kraftschlüssig kontaktiert ist, und wobei bevorzugt das zumindest eine Verschleißkraftelement unmittelbar mit dem Federring verbunden ist.

Bei dieser bevorzugten Ausführungsform der Stützfeder ist weiterhin ein Verschleißkraftelement vorgesehen, welches eine Erhöhung der Betätigungskraft, insbesondere bei einer verlagerten Betätigungsfeder infolge von Verschließ, entgegenwirkt und somit eine Überhöhung der Betätigungskraft, die für einen Benutzer einer Reibkupplung unangenehm sein kann, unterbindet. Besonders bevorzugt liegt das Verschleißkraftelement an der Betätigungsfeder im Bereich der Nocken einer Anpressplatte, die zur Kraftübertragung der Betätigungskraft auf die Anpressplatte eingerichtet sind, auf und wirkt der Kraft der Betätigungsfeder entgegen. Dabei wird die Verschleißkraft besonders bevorzugt erst ab einem vorbestimmten Betätigungsweg so groß, dass die Betätigungskraft merklich verringert wird. In einer anderen Konfiguration liegt das Verschleißkraftelement an einer Betätigungseinheit an und wirkt so parallel geschaltet zur Betätigungsfeder auf die Betätigungseinheit ein.

Ganz besonders bevorzugt ist auch das Verschleißkraftelement unmittelbar mit dem Federring verbunden, das heißt es sind keine weiteren Funktionselemente zwischen dem Federring und dem Verschleißkraftelement angeordnet. Ganz besonders bevorzugt ist das Verschleißkraftelement aus dem gleichen Material wie der Federring gebildet, ganz besonders bevorzugt ist das Verschleißkraftelement einstückig mit dem Federring gebildet.

Gemäß einem weiteren Aspekt der Erfindung wird ein Betätigungssystem für eine Reibkupplung vorgeschlagen, welches zumindest die folgenden Komponenten aufweist:
- eine Betätigungsfeder zum Einrücken oder Ausrücken eines Reibpakets einer Reibkupplung, wobei die Betätigungsfeder mittels eines Befestigungsmittels an einem Kupplungsdeckel fixierbar ist;
- eine Betätigungseinheit zum Ausüben einer antagonistischen Kraft auf die Betätigungsfeder; und
- eine Stützfeder gemäß der obigen Beschreibung, wobei die Stützfeder mittels des Befestigungsmittels der Betätigungsfeder am Kupplungsdeckel fixierbar ist.

Das Betätigungssystem ist zum Betätigen einer Reibkupplung beziehungsweise eines Reibpakets der Reibkupplung eingerichtet, sodass die Reibpartner des Reibpakets miteinander in drehmomentübertragenden Kontakt gebracht werden oder bei einer umgekehrten Konfiguration aus einem drehmomentübertragendem Kontakt herausgeführt werden. Hierzu ist eine Betätigungsfeder vorgesehen, welche in der Regel mit einer Anpressplatte, zum Beispiel über Nocken oder ein Nachstellsystem, in Kontakt steht. Die Betätigungsfeder ist bevorzugt eine Tellerfeder, welche, bevorzugt mit ihrem Außenrand, auf das Reibpaket einwirkt und, bevorzugt mit ihrem Innenrand, mittels einer Betätigungseinheit auslenkbar ist. Ist die Betätigungsfeder ausgelenkt, so wird gegen ihre Betätigungskraft eine antagonistische Kraft eingeleitet, sodass entsprechend das Reibpaket gelöst wird oder die Reibpartner des Reibpakets miteinander drehmomentübertragend verpresst werden. Weiterhin ist eine Stützfeder vorgesehen, wie sie oben beschrieben wurde, wobei die Stützfeder wenig Bauraumbedarf hat und nur einen geringen Materialaufwand aufweist. Hierdurch wird das Betätigungssystem besonders leicht und ist zudem einfach in einer Reibkupplung zu montieren. Hierbei ist besonders vorteilhaft, dass für die Stützfeder kein zusätzliches Befestigungsmittel vorgesehen werden muss, sondern das Befestigungsmittel, zum Beispiel ein Deckelniet, der Betätigungsfeder für die Aufhängung der Stützfeder in der Reibkupplung genutzt werden kann.

Gemäß einer weiteren vorteilhaften Ausführungsform des Betätigungssystems ist das Betätigungssystem vollständig zwischen einer Anpressplatte und einem rotierenden Kupplungsdeckel positionierbar.

Bei dieser bevorzugten Ausführungsform ragt kein Element des Betätigungssystems über den Kupplungsdeckel oder in den Bereich der Anpressplatte hinein, sodass der axiale Bauraum des Betätigungssystems besonders gering ist. Dabei ragt ganz besonders der Anbindungsbereich, zum Beispiel eine Lochlasche für einen Niet, des Verbindungselements, von der Seite der Anpressplatte aus betrachte, hinter den Kupplungsdeckel. Die Stützfeder ist insgesamt mit einer geringen Fläche ausgebildet, sodass sie sich zwischen Lücken einer Betätigungsfeder hindurch erstrecken kann und somit der axiale Bauraum besonders gering wird.

Gemäß einem weiteren Aspekt der Erfindung wird eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket mit zumindest einer Anpressplatte und zumindest einer korrespondierenden Reibscheibe, über die im angepressten Zustand ein Drehmoment übertragbar ist;
- zumindest ein mitrotierender Kupplungsdeckel, welcher mit der zumindest einen Anpressplatte rotatorisch fixiert ist; und
- zumindest ein Betätigungssystem gemäß der obigen Beschreibung für eins der Reibpakete.

Die Reibkupplung ist dazu eingerichtet, ein Drehmoment lösbar von einer Abtriebswelle auf einen Antriebsstrang und umgekehrt zu übertragen. Dies wird in der Regel über das zumindest eine Reibpaket erreicht, welches eine axial verschiebbare, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Aufgrund des Einrückvorgangs mit, mitunter hoher Relativgeschwindigkeit zwischen der Anpressplatte und der zumindest einen Reibscheibe, sowie aufgrund eines mitunter hohen (einseitig anliegenden) Drehmoments kann ein Reibbelag zwischen der Anpressplatte und der zumindest einen Reibscheibe verschlissen werden, das heißt in seiner Dicke abnehmen. Dies führt je nach Konfiguration der Reibkupplung zu einer Verlagerung der Betätigungsfeder beziehungsweise zu einer Verlängerung des Einrückwegs und/oder Ausrückwegs der Betätigungsfeder. Die Betätigungsfeder kann auch Setzungserscheinungen aufweisen. Die beschriebenen Vorgänge führen zu einer Veränderung der Kraftkennlinie der Betätigungsfeder. Mittels der Stützfeder sind solche Veränderungen abmilderbar oder sogar ausgleichbar. Auch ist in einer bevorzugten Konfiguration eine Veränderung der Kraftkennlinie in einem Neuzustand der Betätigungsfeder und/oder Reibbeläge mittels der Stützfeder möglich, sodass die Betätigungsfeder für andere Kraft-Weg-Abschnitte verbessert auslegbar ist. In jedem Falle ist die Stützfeder besonders platzsparend und weist eine geringe Masse auf, sodass die Stützfeder gut in eine schlanke Konfiguration einer Reibkupplung einbindbar ist.

Gemäß einer weiteren vorteilhaften Ausführungsform der Reibkupplung ist die Stützfeder zumindest teilweise gemeinsam mit der Betätigungsfeder mittels zumindest eines Betätigungsfederbolzens axial am Kupplungsdeckel fixiert.

Bei dieser bevorzugten Ausführungsform ist die Betätigungsfeder zumindest teilweise von Betätigungsfederbolzen geführt, welche eine Querkraft der Betätigungsfeder aufnehmen und die Betätigungsfeder zentrieren. Die Stützfeder ist hierbei zumindest teilweise über diese Betätigungsfederbolzen axial fixiert, sodass kein zusätzliches Befestigungselement für zumindest Teile der Verbindungselemente der Stützfeder vorgesehen werden müssen. Ganz besonders bevorzugt ist das zumindest eine Verbindungselement der Stützfeder an einem zur Anpressplatte hin gerichteten Flansch des Betätigungsfederbolzens axial fixiert.

Gemäß einem weiteren Aspekt der Erfindung wird auch ein Kraftfahrzeug vorgeschlagen, welches eine Antriebseinheit mit einer Abtriebswelle, einen Antriebsstrang und eine Reibkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Reibkupplung mit der sehr platzsparenden Stützfeder ist besonders für einen, insbesondere axial, kleinen Bauraum geeignet. Zudem ist mit der Stützfeder eine verbesserte Gesamtbetätigungskraft realisierbar.

Personenkraftwagen werden einer Fahrzeugklasse nach beispielsweise Größe, Preis, Gewicht, Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: einen Ausschnitt einer Reibkupplung mit Stützfeder,
- Fig. 2:: eine Stützfeder mit Verbindungselement,
- Fig. 3:: eine Stützfeder mit Minimumfederzunge,
- Fig. 4:: einen Ausschnitt einer Stützfeder mit Minimumfederzunge,
- Fig. 5:: eine Reibkupplung mit Stützfeder mit Minimumfederzunge,
- Fig. 6:: eine Reibkupplung mit Stützfeder in Ansicht von unten,
- Fig. 7:: ein Kraftdiagramm eines Stützfedereinflusses auf die Betätigungsfederkraft,
- Fig. 8:: eine Stützfeder mit Verschleißkraftelement,
- Fig. 9:: einen Ausschnitt einer Stützfeder mit Verschleißkraftelement,
- Fig. 10:: eine Reibkupplung mit einer Stützfeder mit Verschleißkraftelement,
- Fig. 11:: einen Ausschnitt eines Verschleißkraftelements in einer Reibkupplung,
- Fig. 12:: ein Kraftdiagramm einer Verschleißkraft,
- Fig. 13:: ein Kraftdiagramm einer Ausrückkraft; und
- Fig. 14:: ein Kraftfahrzeug mit Reibkupplung.

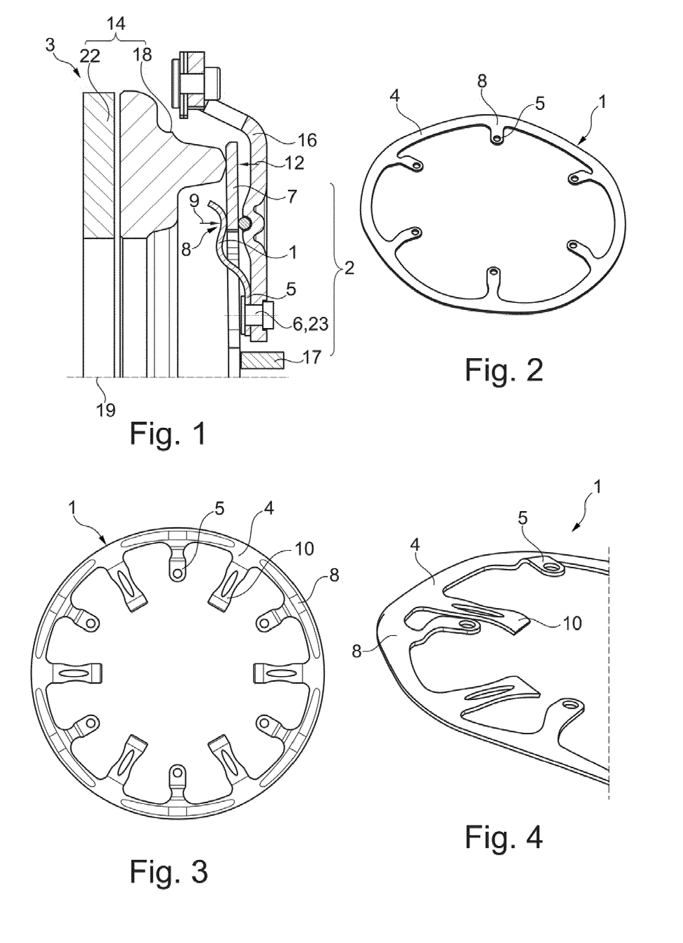

Fig. 1 zeigt einen Ausschnitt einer Reibkupplung 3 mit einem Reibpaket 14 bestehend aus einer Anpressplatte 18 und einer Reibescheibe 22, welche mittels einer Betätigungsfeder 7 miteinander verpressbar sind, sodass dann ein Drehmoment um die Rotationsachse 19 übertragbar ist. Zum Lösen Einwirkung der Einrückkraft 12 der Betätigungsfeder 7 auf das Reibpaket 14 ist eine Betätigungseinheit 17 vorgesehen, welche auf die Betätigungsfeder 7 in entgegengesetzter Richtung einwirkt. Die Betätigungsfeder 7 ist dabei auf einer Stützfeder 1 gelagert. Die Stützfeder 1 ist mittels seines Verbindungselements 5 mittels eines Befestigungsmittels 6 an einem mitrotierenden Kupplungsdeckel 16 befestigt. Hier ist das Befestigungsmittel 6 als Betätigungsfederbolzen 23 ausgebildet, welcher die Betätigungsfeder 7 zentriert und führt. Diese Elemente bilden zusammen ein Betätigungssystem 2 zur Betätigung des Reibpakets 14. Die Betätigungsfeder 7 liegt auf dem Stützelement 8 der Stützfeder 1 auf, wo die Stützkraft 9 auf die Betätigungsfeder 7 übertragen wird. Bei einer Konfiguration der Stützfeder 1 als Sensierfeder wird bei einer Überschreitung der Stützkraft 9 durch die Einrückkraft 12 eine Nachstellung ausgelöst, das heißt, die Anpressplatte 18 wird hin zur Reibscheibe 22 verlagert, sodass die Betätigungseinheit 17 weiterhin in ihrer Grundstellung einen vordefinierten Weg zurücklegt, um die Betätigungsfeder 7 zu betätigen. Die Betätigungsfeder 7 wird dabei entweder ebenso verlagert oder in eine neue Grundstellung überführt, wobei sie eine veränderte Kraftkennlinie über den Einrückweg beziehungsweise Ausrückweg aufweist.

In Fig. 2 ist eine Konfiguration Stützfeder 1 gezeigt, bei der ein umlaufender Federring 4 gebildet ist, welcher eine Mehrzahl von Stützelementen 8 aufweist, welche bei einer Mehrzahl von Verbindungselementen 5 angeordnet sind. Diese Stützfeder 1 ist besonders einfach aufgebaut und daher kostengünstig und platzsparend in eine Reibkupplung 3, wie sie zum Beispiel in Fig. 3 gezeigt ist, einbindbar.

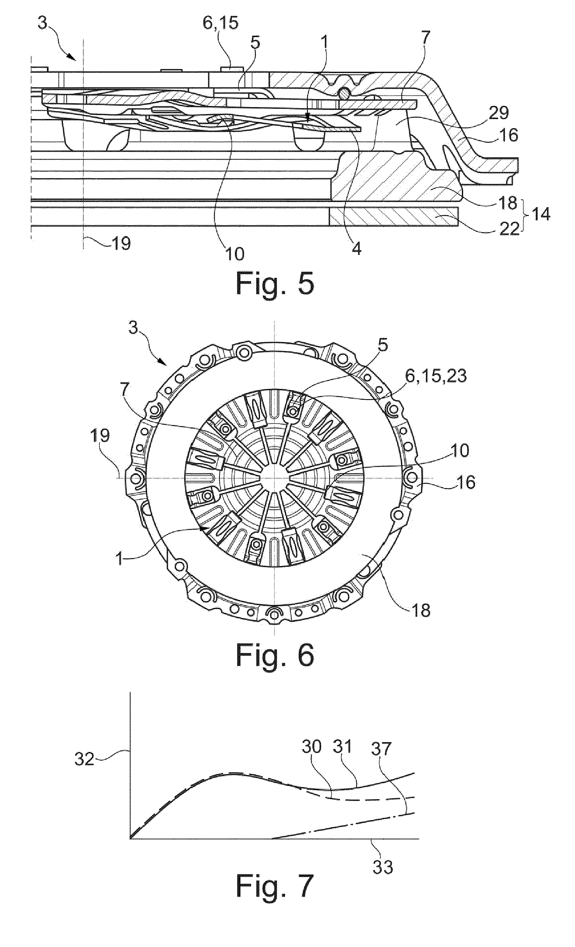

In Fig. 3 ist eine ähnliche Konfiguration einer Stützfeder 1 wie in Fig. 2 gezeigt, wobei hier zusätzlich eine Mehrzahl von Minimumfederzungen 10 vorgesehen sind, deren Funktion in Fig. 5 deutlicher wird.

In Fig. 4 ist ein Ausschnitt derselben Konfiguration der Stützfeder 1 wie in Fig. 3 aus einer anderen Perspektive gezeigt.

In Fig. 5 ist eine Reibkupplung 3 mit einer Betätigungsfeder 7 und einem Reibpaket 14 mit Anpressplatte 18 und Reibscheibe 22 gezeigt, wobei hier eine Anpressnocke 29 zu sehen ist, auf die die Betätigungsfeder 7 einwirkt. Die Elemente der Reibkupplung 3 sind um eine Rotationsachse 19 rotierbar. In der Reibkupplung 3 ist eine Stützfeder 1 wie in den Fig. 3 und 4 dargestellt angebracht, wobei das Verbindungselement 5 über ein Befestigungsmittel 6, welches hier als Deckelniet 15 ausgebildet ist, befestigt ist. Der Deckelfederniet 15 befestigt das Verbindungselement 5 mit dem mitrotierenden Kupplungsdeckel 16. In dieser Konfiguration ist die Minimumfederzunge 10 in dieser ausgerückten Lage von der Betätigungsfeder 7 beabstandet, sodass keine Kraft von der Minimumfederzunge 10 übertragen wird.

In Fig. 6 ist eine Ansicht von der Seite der Anpressplatte 18 auf eine Reibkupplung 3 wie in Fig. 5 gezeigt, wobei hier zu erkennen ist, dass das Befestigungsmittel 6, welches hier als Deckelniet 15 ausgebildet ist, zugleich einen Betätigungsfederbolzen 23 für die Betätigungsfeder 7 bildet.

In Fig. 7 ist ein Kraftdiagramm dargestellt mit einer Hochachse, die die Kraftachse 32 einer Abszisse, die die Wegachse 33 darstellt. Die Betätigungsfederkraft ist durch die Kurve 30 dargestellt und es ist zu erkennen, das die Betätigungsfederkraft 30 über den Betätigungsweg abnimmt beziehungsweise unter ein Maximum fällt und darunter verbleibt. Die Minimumfederkraft 37 beginnt erst bei der Abnahme der Betätigungsfederkraft 30 zu wirken und nimmt über den Betätigungsweg zu. Aus der Überlagerung der Kräfte ergibt sich eine Resultierende 31 mit einer über den Betätigungsweg letztendlich über ein Maximum ansteigenden Betätigungskraft. Der Abfall der Betätigungsfederkraft 30 wird so in gewünschter Weise kompensiert.

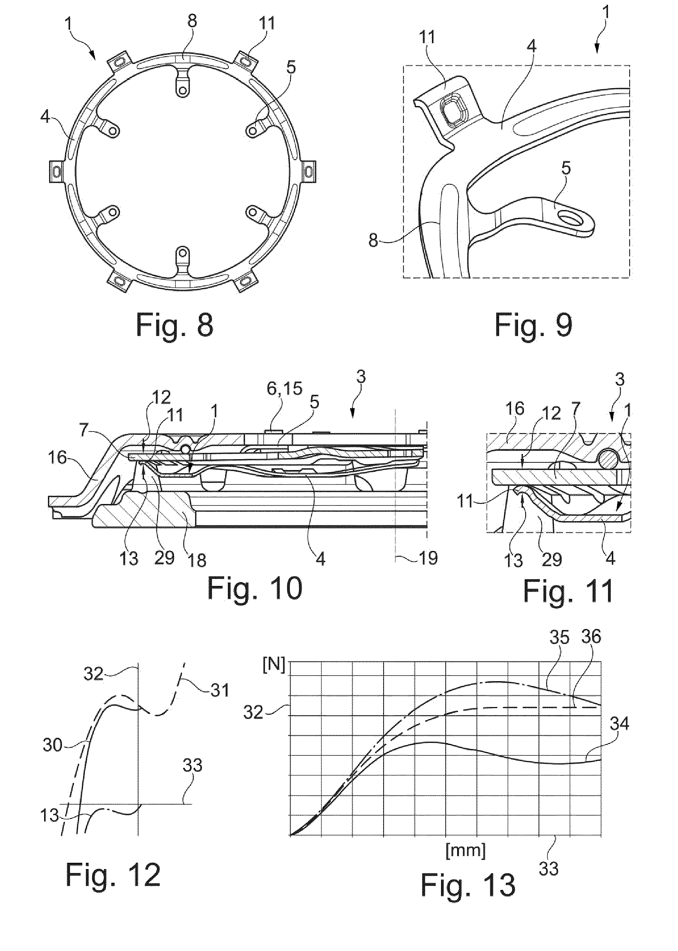

In Fig. 8 ist eine Stützfeder 1 mit einem umlaufenden Federring 4 und einer Mehrzahl von Stützelementen 8 gezeigt, die auch hier wieder in Überdeckung mit der Lage des Verbindungselements 11 angebracht sind. Zwischen den Stützelementen 8 ist jeweils ein Verschleißkraftelement 11 nach außen gerichtet angeordnet, welches dazu eingerichtet ist, an dem äußeren Rand einer Betätigungsfeder 7, wie sie zum Beispiel in den Fig. 10 und 11 dargestellt ist, anzuliegen.

In Fig. 9 ist ein Detail dieser Stützfeder 1 aus einer anderen Perspektive gezeigt, wobei zu erkennen ist, dass das Verschleißkraftelement 11 wie auch das Verbindungselement 5 nach oben ragt, das heißt hin zu einem Kupplungsdeckel 16, wie er zum Beispiel in Fig. 10 gezeigt ist.

In Fig. 10 ist eine Reibkupplung 3 mit um die Rotationsachse rotierbaren Elementen gezeigt, wobei hier eine Stützfeder 1 mit einem umlaufenden Federring 4 vorgesehen ist, die ein Verschleißkraftelement 11 ausbildet, welches eine Verschleißkraft 13 entgegengesetzt zur Einrückkraft 12 der Betätigungsfeder 7 auf die Betätigungsfeder 7 ausübt. Somit wirkt das Verschleißkraftelement 11 der Einrückkraft 12 auf die Anpressplatte 18 entgegen. Die Stützfeder 1 ist hier über ein Verbindungselement 5 mit einem Befestigungsmittel 6, welches hier als Deckelniet 15 mit dem mitrotierenden Kupplungsdeckel 16 verbunden ist, in der Reibkupplung 3 befestigt. Das Verschleißkraftelement 11 greift im Bereich der Umlauflinie einer Anpressnocke 29 auf die Betätigungsfeder 7 ein.

In Fig. 11 ist die Konfiguration der Reibkupplung 3 gemäß Fig. 10 im Detail gezeigt, wobei die Antagonisten Einrückkraft 12 und Verschleißkraft 13 gut zu erkennen sind.

In Fig. 12 ist ein Kraftdiagramm gezeigt, bei dem die Hochachse eine Kraftachse 32 darstellt und die Abszisse eine Wegachse 33. Die Betätigungsfederkraft 30 ist hier ausschnittsweise dargestellt und zeigt eine über den Weg nachteiligen Kraftverlauf. Weiterhin ist die Verschleißkraft 13 eines Verschleißkraftelements 11 (vergleiche Fig. 11) aufgezeichnet, welche in der Überlagerung mit der Betätigungsfederkraft zur Resultierenden 31 führt.

In Fig. 13 ist der Federkraftverlauf in einem Kraftdiagramm mit einer Kraftachse 32 und einer Wegachse 33 gezeigt, wobei die Kurve 34 die Ausrückkraft im Neuzustand darstellt und die Kurve 35 die Ausrückkraft nach Verschleiß und ohne Verschleißkraftüberlagerung darstellt. Mit der Verschleißkraftüberlagerung ergibt sich die Kurve 36, die die Kraft nach Verschleiß mit Verschleißkraftüberlagerung darstellt. Diese Kraft der Kurve 36 nimmt nicht unzulässig zu, sondern weist hier vorteilhafterweise über den Ausrückweg eine konstante Kraft auf.

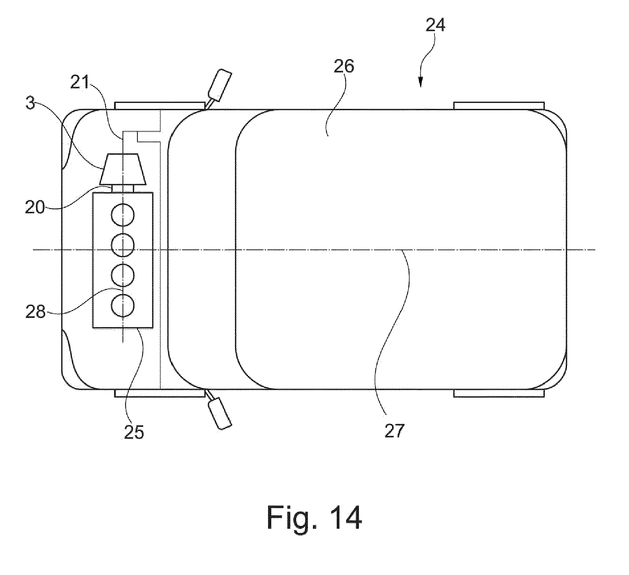

In Fig. 14 ist ein Kraftfahrzeug 24 mit einer Antriebseinheit 25 gezeigt, welche mit ihrer Motorachse 28 quer zur Längsachse 27 vor der Fahrerkabine 26 angeordnet ist. Die Antriebseinheit 25 ist hier als Verbrennungskraftmaschine dargestellt, welche über eine Abtriebswelle 20 mittels einer Reibkupplung 3 mit einem hier rein schematisch dargestellten Antriebsstrang 21 verbunden ist.

Mit der hier vorgeschlagenen Stützfeder ist eine bauraumsparende und materialsparende Konfiguration vorgeschlagen, die leicht in eine Reibkupplung mit geringer axialer Ausdehnung einbindbar ist.

### Bezugszeichenliste

- 1: Stützfeder
- 2: Betätigungssystem
- 3: Reibkupplung
- 4: Federring
- 5: Verbindungselement
- 6: Befestigungsmittel
- 7: Betätigungsfeder
- 8: Stützelement
- 9: Stützkraft
- 10: Minimumfederzunge
- 11: Verschleißkraftelement
- 12: Einrückkraft
- 13: Verschleißkraft
- 14: Reibpaket
- 15: Deckelniet
- 16: Kupplungsdeckel
- 17: Betätigungseinheit
- 18: Anpressplatte
- 19: Rotationsachse
- 20: Abtriebswelle
- 21: Antriebsstrang
- 22: Reibscheibe
- 23: Betätigungsfederbolzen
- 24: Kraftfahrzeug
- 25: Antriebseinheit
- 26: Fahrerkabine
- 27: Längsachse
- 28: Motorachse
- 29: Anpressnocke
- 30: Betätigungsfederkraft
- 31: Resultierende
- 32: Kraftachse
- 33: Wegachse
- 34: Ausrückkraft im Neuzustand
- 35: Ausrückkraft nach Verschleiß ohne Verschleißkraftelement
- 36: Ausrückkraft nach Verschleiß mit Verschleißkraftelement
- 37: Minimumfederkraft

## Patentansprüche

1. Stützfeder (1) für ein Betätigungssystem (2) einer Reibkupplung (3), aufweisend zumindest die folgenden Komponenten:
- einen umlaufenden Federring (4);
- zumindest ein Verbindungselement (5) zum Anbinden der Stützfeder (1) mittels Befestigungsmittel (6), bevorzugt mittels Deckelniet (15), für eine Betätigungsfeder (7); und
- zumindest ein Stützelement (8) zur Anlage an einer Betätigungsfeder (7) eines Betätigungssystems (2) und zur Übertragung einer Stützkraft (9) auf diese Betätigungsfeder (7), wobei das Stützelement (8) und das Verbindungselement (5) unmittelbar mit dem Federring (4) verbunden sind.

2. Stützfeder (1) nach Anspruch 1, wobei die Stützfeder (1) weiterhin zumindest eine Minimumfederzunge (10) aufweist, wobei die Minimumfederzunge (10) im Einbau in einem Betätigungssystem (2) in einem eingerückten Zustand der Betätigungsfeder (7) von der Betätigungsfeder (7) und einer Betätigungseinheit (17) beabstandet ist oder kraftlos kontaktiert ist und in einem ausrückenden Zustand der Betätigungsfeder (7) mit der Betätigungsfeder (7) und/oder der Betätigungseinheit (17) antagonistisch kraftschlüssig kontaktiert ist, wobei bevorzugt die zumindest eine Minimumfederzunge (10) unmittelbar mit dem Federring (4) verbunden ist.

3. Stützfeder (1) nach Anspruch 1 oder 2, wobei die Stützfeder (1) weiterhin zumindest einen Verschleißkraftelement (11) aufweist, wobei das Verschleißkraftelement (11) im Einbau in einem Betätigungssystem (2) eine der Einrückkraft (12) der Betätigungsfeder (7) entgegenwirkende Verschleißkraft (13) auf das Betätigungssystem (2) ausübt, wobei bevorzugt das zumindest eine Verschleißkraftelement (11) mit der Betätigungsfeder (7) antagonistisch kraftschlüssig kontaktiert ist, und wobei bevorzugt das zumindest eine Verschleißkraftelement (11) unmittelbar mit dem Federring (4) verbunden ist.

4. Betätigungssystem (2) für eine Reibkupplung (3), aufweisend zumindest die folgenden Komponenten:
- eine Betätigungsfeder (7) zum Einrücken oder Ausrücken eines Reibpakets (14) einer Reibkupplung (3), wobei die Betätigungsfeder (7) mittels eines Befestigungsmittels (6) an einem Kupplungsdeckel (16) fixierbar ist;
- eine Betätigungseinheit (17) zum Ausüben einer antagonistischen Kraft auf die Betätigungsfeder (7); und
- eine Stützfeder (1) nach einem der vorhergehenden Ansprüche, wobei die Stützfeder (1) mittels des Befestigungsmittels (6) der Betätigungsfeder (7) am Kupplungsdeckel (16) fixierbar ist.

5. Betätigungssystem (2) nach Anspruch 4, wobei das Betätigungssystem (2) vollständig zwischen einer Anpressplatte (18) und einem mitrotierenden Kupplungsdeckel (16) positionierbar ist.

6. Reibkupplung (3) mit einer Rotationsachse (19) zum lösbaren Verbinden einer Abtriebswelle (20) mit einem Antriebsstrang (21), aufweisend zumindest die folgenden Komponenten:
- zumindest ein Reibpaket (14) mit zumindest einer Anpressplatte (18) und zumindest einer korrespondierenden Reibscheibe (22), über die im angepressten Zustand ein Drehmoment übertragbar ist;
- zumindest ein mitrotierender Kupplungsdeckel (16), welcher mit der zumindest einen Anpressplatte (18) rotatorisch fixiert ist; und
- zumindest ein Betätigungssystem (2) nach Anspruch 4 oder 5 für eins der Reibpakete (14).

7. Reibkupplung (3) nach Anspruch 6, wobei die Stützfeder (1) zumindest teilweise gemeinsam mit der Betätigungsfeder (7) mittels zumindest eines Betätigungsfederbolzens (23) axial am Kupplungsdeckel (16) fixiert ist.

8. Kraftfahrzeug (24) aufweisend eine Antriebseinheit (25) mit einer Abtriebswelle (20), einen Antriebsstrang (21) und eine Reibkupplung (3) nach Anspruch 6 oder 7.
